## Europäisches Patentamt
## European Patent Office
## Office européen des brevets

(19)

(11) Publication number: **0 015 285**
**B1**

(12) **EUROPEAN PATENT SPECIFICATION**

(45) Date of publication of patent specification: **22.02.84**

(51) Int. Cl.³: **C 04 B 35/58**

(21) Application number: **79900807.3**

(22) Date of filing: **13.06.79**

(86) International application number:
**PCT/US79/00407**

(87) International publication number:
**WO 80/00080 24.01.80 Gazette 80/2**

(54) **HIGH STRENGTH SILICON NITRIDE.**

(30) Priority: **15.06.78 US 916333**

(43) Date of publication of application:
**17.09.80 Bulletin 80/19**

(45) Publication of the grant of the patent:
**22.02.84 Bulletin 84/8**

(84) Designated Contracting States:
**DE FR GB**

(56) References cited:
**DE - A - 2 258 762**
**DE - A - 2 351 163**
**US - A - 3 830 652**
**US - A - 4 046 580**
**US - A - 4 066 468**

**Yogyo-Kyokai-Shi, issued August 1977, Mamoru Mitomo, Pages 408-412**
**Journal of the American Ceramic Society issued September 1977, J. Thomas Smith, temperature and compositional stability of a Y6 Si6 O21 phase in oxidized Si3N4, pages 465-466**
**Ceramic Bulletin, issued April 1978, Akihikotsuge et al, High Strength Hot Pressed Si3N4 with concurrent Y2O3 additions, pages 424-431**

(73) Proprietor: **GTE LABORATORIES INCORPORATED**
**40 Sylvan Road**
**Waltham, MA 02154 (US)**

(72) Inventor: **SMITH, Thomas, J.**
**3, Patriots Road**
**Acton, MA 01720 (US)**
Inventor: **QUACKENBUSH, Carr Lane, W.**
**3 Emerson Drive**
**Acton, Mass. 01720 (US)**

(74) Representative: **Reinländer & Bernhardt**
**Patentanwälte**
**Orthstrasse 12**
**D-8000 München 60 (DE)**

(56) References cited:
**CHEMICAL ABSTRACTS, vol. 87, no. 2, July 11, 1977, page 290, abstract 10354d Columbus, Ohio, USA**
**JOURNAL OF THE AMERICAN CERAMIC SOCIETY, vol. 60, no. 5/6, May-June 1977, Columbus, Ohio, USA F.F. LANGE: "Phase relations and stability studies in the Si3N4-SiO2-Y2O3 pseudoternary system", pages 249-252**

# O 015 285

## High strength silicon nitride

Technical field

This invention relates to a method for producing polycrystalline bodies of silicon nitride ($Si_3N_4$) containing $Y_2O_3$ and $Al_2O_3$ to facilitate sintering, and exhibiting optimum mechanical strength.

Background art

$Si_3N_4$ powder characterized by cation impurities of 0.1 weight percent or less, a morphology of predominately crystalline alpha phase and/or amorphous phase and fine particle size (3 $\mu$m or less average particle size as determined by B.E.T.), when consolidated with an additive such as MgO or $Y_2O_3$ and sintered, is known to enable production of polycrystalline bodies approaching theoretical density. See U.S. Patent 4,073,845, issued to S. T. Buljan et al. on Feb. 14, 1978, and assigned to GTE Sylvania Incorporated. Such powders may be consolidated into dense bodies by either hot pressing at less severe temperature and pressure conditions than are necessary with less pure and less reactive powders, or by cold pressing and sintering, which is not possible with some less pure and less reactive powders. In the fabrication of such polycrystalline bodies, up to 25 weight percent of $Y_2O_3$ or a lanthanide rare earth oxide such as $CeO_2$ is typically added as a sintering or densifying aid.

In addition, some workers in the prior art have intentionally added impurity materials other than the primary densification aid, such as M. Mitomo, "Sintering of $Si_3N_4$ with $Al_2O_3$ and $Y_2O_3$", *Yogyo-kyokai-Shie, 85* (8) 408—412, 1977. Others have chosen to introduce impurities by the selection of impure starting materials such as R. W. Rice et al., "Hot Pressed $Si_3N_4$ with Zr-Based Additions", *Journal of the American Ceramic Society, 58,* (5—6) 264 (1975).

A. Tsuge et al. in Ceramic Bulletin, issued April 1978, pages 424 to 431, teach a specific method for obtaining a crystalline intergranular phase in a silicon nitride body. The authors have found that methods which are capable of crystallizing non-crystalline substances generally known in the art, including heating, cooling, the addition of nucleating substances, are inappropriate for silicon nitride material. Accordingly, the molded mass of unsintered silicon nitride must be heat-treated in the presence of aluminium nitride in order to achieve a crystalline intergranular phase. The heat treatment is subsequently followed by hot pressing in order to obtain a dense body. Thus, the authors teach a presintering heat treatment at 1750°C, which must be in the presence of aluminium nitride.

Another high temperature property of $Si_3N_4$ which is effected by impurities is the material's resistance to oxidation. Rare earth oxide-containing $Si_3N_4$ materials apparently resist oxidation by formation of a surface silicate glass layer which forms by the oxidation of $Si_3N_4$. This interfacial layer impedes further oxidation by acting as a barrier to further oxygen diffusion. The oxygen diffusion rate has generally been observed to increase by the addition of modifiers or intermediates to the glass structure. It would thus be expected that the presence of modifier compounds such as the alkali or alkaline earth oxides or intermediates such as $Al_2O_3$ in a $Si_3N_4$ body would decrease the body's resistance to oxidation.

Disclosure of invention

In accordance with the invention, a method is provided for facilitating sintering of $Si_3N_4$ bodies to densities approaching theoretical density while maintaining optimum levels of mechanical strength at both room temperature and elevated temperature, making them particularly useful in applications such as vehicular and aerospace engine and related structural parts, regenerators and recuperators for waste heat recovery, etc.

Such method for producing a polycrystalline body consisting essentially of a first phase of $Si_3N_4$ grains, and a second substantially completely crystalline intergranular phase consisting essentially of $SiO_2$, $Y_2O_3$ and $Al_2O_3$ comprises:

consolidating particulate starting materials of $Si_3N_4$ powder and $Y_2O_3$ powder, and $Al_2O_3$ powder in the amount of 0.25 to 2.5 weight percent of the materials, the $Si_3N_4$ powder containing up to 0.1 weight percent of cation impurities and from 2 to 4 weight percent of $SiO_2$ as an impurity on the surface of the particles;

sintering the consolidated materials;

and heat treating the sintered body within the range of 1250°C to 1600°C for a time of at least one hour in a non-oxidizing atmosphere to achieve substantially complete crystallisation of the integranular phase.

Such method comprises the steps of mixing $Si_3N_4$ powder of high purity (less than 0.1 weight percent cation impurities and 2 to 4 weight percent $SiO_2$) with controlled amounts of $Y_2O_3$ and $Al_2O_3$ as densifying and sintering aids, and consolidating and sintering the materials to a polycrystalline body, and thereafter subjecting the body to a post-sintering crystallization heat treatment to optimize mechanical strength.

In accordance with the invention, good oxidation resistance is maintained for these $Y_2O_3$ and $Al_2O_3$-containing bodies.

Brief description of the drawing

Figure 1 is a dilatometric graph for a simulated intergranular composition showing curves "a" and "b" before and after crystallization;

Figure 2 is a graph of Oxidation Rate Constance $K_p (K_g\ ^2/m^4\text{-sec})$ vs. Reciprocal Temperature $1/T \times 10^4 (^\circ K^{-1})$ for $Si_3N_4$—$Y_2O_3$ bodies with and without $Al_2O_3$.

Best mode for carrying out the invention

For a better understanding of the present invention, together with other and further objects, advantages and capabilities thereof, reference is made to the following disclosure and appended claims in connection with the above description of some of the aspects of the invention.

The $Si_3N_4$ starting material may be amorphous material, amorphous material which has been partly crystallized by heat treatment, or may be a mixture of substantially completely amorphous material and substantially completely crystalline material.

The presence of $Al_2O_3$ in the composition facilitates consolidation to full density during pressureless sintering or hot pressing, as indicated by lower temperatures, shorter times and, in the case of pressureless sintering, lower nitrogen overpressures used to control $Si_3N_4$ vaporization.

The $Al_2O_3$ should be present in the composition in the amount of at least 0.25 weight percent, below which enhancement of sintering is negligible, preferably 1 to 2.5 weight percent. Such $Al_2O_3$ may be present as an impurity in other starting material, or added as a starting material or precursor, such as $Al(OH)_3$, or may be introduced through abrasion of $Al_2O_3$ mills and/or milling media.

The $Y_2O_3$ may be added in the amount of from about 2 to 25 weight percent, although for $SiO_2$ content of at least 3 weight percent, 3 to 13 weight percent $Y_2O_3$ is preferred for optimum oxidation resistance. $Y_2O_3$ is most preferably added in the amount of 3 to 6 weight percent in order to optimize oxidation resistance.

While a general procedure is outlined for hot pressing, it is to be understood that alternate processes for producing $Si_3N_4$ bodies are also suitable for the practice of the invention, for example, hot isostatic pressing or any pressureless sintering step preceded by a suitable consolidation step such as dry pressing, isostatic pressing, extruding, slip casting, injection molding, etc. See U.S. Patent 4,073,845 for a general procedure for pressureless sintering of silicon nitride bodies.

A general procedure for hot pressing will now be described. Silicon nitride powder consisting of 30 to 40 weight percent amorphous silicon nitride, remainder crystalline silicon nitride, with about 95 percent of the crystalline silicon nitride being the alpha phase, 100 parts per million cation impurities and about 2 to 4 weight percent $SiO_2$, is mixed with $Y_2O_3$ using a solution of toluene and about 3 volume percent methanol to form a slurry and the slurry is milled with $Al_2O_3$, or $Si_3N_4$ grinding media for about 1 hour to affect a uniform ball milled blend of the starting powders. Where $Al_2O_3$ grinding media are chosen for wet milling it is to be expected that from about 0.5 to 1.5 weight percent $Al_2O_3$ will be picked up by abrasion of the milling media. Such amounts constitutes sufficient $Al_2O_3$ to result in significant enhancement of the sintering process, enabling significantly shorter sintering times. Where $ZrO_2$ or $Si_3N_4$ milling media are employed, $Al_2O_3$ may be added to the starting material in the form of a powder, or alternatively $Si_3N_4$ powder containing $Al_2O_3$ as an impurity may be used. The slurry is dried and milled in the dry state for an additional 3 to 50 hours, and then screened through a coarse mesh, e.g. 50, screen. Where alumina milling media are employed during dry milling, it may be expected that about 0.5 to 1.5 weight percent additional $Al_2O_3$ may be picked up in the batch. The screened powder is then loaded into a graphite hot pressing die whose interior surfaces have previously been coated with boron nitride powder. The powder is then prepressed at about 138.27 bar and then the die is placed in a chamber containing argon, and a pressure of about 34.32 bar is applied up to about 1200°C, and then pressure and temperature are increased simultaneously so that the ultimate pressure and temperature are achieved at about the same time. The densification process is monitored using a dial guage indicating ram travel within the die body. A rate of downward movement of the ram cross head below about 0.1 mm per hour indicates completion of densification. The assembly is then cooled over a period of about 1 to 2 hours. Ultimate pressures and temperatures of from about 206.92 to 345.19 bar and 1675°C to 1800°C for a time of about 2 to 5 hours are adequate conditions for the achievement of essentially full densification of the silicon nitride body.

To show the effect of impurities in general and $Al_2O_3$ in particular on consolidation time during hot pressing, two samples containing 13 weight percent $Y_2O_3$ were hot pressed using as starting $Si_3N_4$ material high purity and low purity $Si_3N_4$ powders, respectively. Impurity levels are shown in Table I in weight %.

TABLE I

| | High purity $Si_3N_4$ | Low purity $Si_3N_4$ |
|---|---|---|
| Al | 0.002 | 0.423 |
| Fe | — | 1.15 |
| Mn | — | 0.027 |
| C | — | 0.458 |
| Mg | 0.0007 | 0.013 |
| Ca | 0.0006 | 0.224 |
| Mo | 0.01 | — |

Hot pressing time and other conditions are shown in Table II.

TABLE II

| $Si_3N_4$ powder | $Al_2O_3$ (weight %) | Hot pressing time (min.) | Hot pressing temp. (°C) | Hot pressing pressure (bar) |
|---|---|---|---|---|
| High Purity | 0.004 | 290 | 1750 | 345.19 |
| Low Purity | 0.800 | 195 | 1750 | 345.19 |

As may be seen from the table, for the same temperature and pressure, hot pressing time was reduced from 290 to 195 minutes where $Al_2O_3$ was increased from about 0.004 to about 0.800.

To show the effect of the presence of $Al_2O_3$ upon pressureless sintering temperatures and nitrogen pressures necessary to reach full densification, four polycrystalline $Si_3N_4$ bodies containing 6 weight percent $Y_2O_3$ and 0, 1.5 and 2.5 weight percent $Al_2O_3$ were pressureless sintered. Results are shown in Table III.

TABLE III

| Sample No. | Density (% theoretical) | Weight % $Al_2O_3$ | Maximum sintering temp. (°C) | $N_2$ Overpressure (bar) |
|---|---|---|---|---|
| 1 | 100.0 | 2.5 | 1825 | 7.21 |
| 2 | 100.0 | 1.5 | 1825 | 7.89 |
| 3 | 98.0 | 0 | 1950 | 8.92 |
| 4 | 98.2 | 0 | 1970+ | 9.61 |

Results clearly show the beneficial effect of $Al_2O_3$ upon sintering temperature and $N_2$ overpressure. As $Al_2O_3$ increased from 0 to 2.5 weight percent, temperature decreased from 1970+°C to 1825°C, overpressure decreased from 9.61 to 7.21 bar, and density increased from 98 to 100 percent of theoretical.

After densification by pressureless sintering or hot pressing, the $Al_2O_3$-containing intergranular phase will generally be in a predominately amorphous state. Because this amorphous state has poor mechanical properties above about 1200°C, it must be crystallized by a post-sintering heat treatment in order to obtain optimum high temperature strength. Such heat treatment should be carried out in a non-oxidizing atmosphere such as nitrogen or a rare gas, such as He, Ne, or Ar, at a temperature of 1250°C to 1600°C for at least one hour but preferably at least five hours, in order to avoid substantial oxidation of the body.

In order to demonstrate crystallization of the intergranular phase, three samples of $Si_3N_4$ plus 12 weight percent $Y_2O_3$, about 3 weight percent $SiO_2$ and about 2 to 3 weight percent $Al_2O_3$ were prepared by pressureless sintering at 1775°C for 3 hours in a nitrogen atmosphere. X-ray diffraction analysis showed only beta $Si_3N_4$, indicating an amorphous intergranular phase. Heat treatment conditions and crystalline phases shown to be present after heat treatment are shown in Table IV.

TABLE IV

| Sample No. | Temp (°C) | Time (hrs.) | Phases present |
|---|---|---|---|
| 1 | 1400°C | 5 | Beta $Si_3N_4$, $10Y_2O_3 . 9SiO_2 . Si_3N_4$ |
| 2 | 1540°C | 5 | Beta $Si_3N_4$, $10Y_2O_3 . 9SiO_2 . Si_3N_4$ |
| 3 | 1650°C | 5 | Beta $Si_3N_4$ |

1650°C was too high a temperature to crystallize the second phase.

In order to further demonstrate crystallization of the intergranular material, a powder mixture of 52 weight percent $Y_2O_3$-28 weight percent $Al_2O_3$-20 weight percent $SiO_2$ was prepared. This is a simulation of the second phase composition of the $Si_3N_4$ body containing 6 weight percent $Y_2O_3$ with 2

# O 015 285

weight percent $Al_2O_3$. The $SiO_2$ was added since it is a natural species on the surface of the starting $Si_3N_4$ powder typically at about the 3 weight percent level. The mixture was melted at 1750°C and then quickly cooled to room temperature. As melted, the $Y_2O_3$—$Al_2O_3$—$SiO_2$ composition contained the non-equilibrium phase $7Y_2O_3 . 9SiO_2$ (according to R. R. Wills et al., *J. Mat. Sci.*, Vol. 11, pp. 1305—1309, 1976) plus a large amount of amorphous material as evidenced by x-ray diffraction.

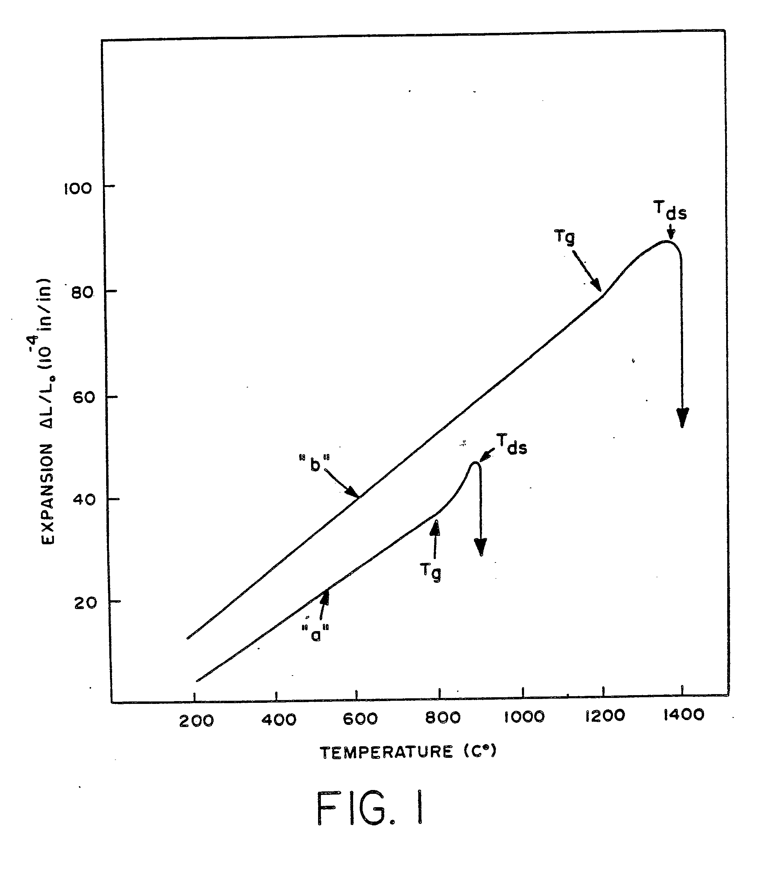

Dilatometer tests were carried out on the intergranular phase simulated composition prepared above. The curves are shown in Figure 1. Curve "a" indicates that the composition prior to crystallization has a glass transition of about 800°C and a dilatometric softening point of about 890°C. The transition temperature is that at which the thermal expansion changes from a relatively low value of a solid glass to the relatively high value of a liquid phase, while the softening point is the temperature at which the pressure of the dilatometer probe causes deformation of the sample. For comparison, curve "b", after heating at 3.3°C per minute to 1400°C and cooling at the same rate, shows some evidence of a glass transition temperature at as high as 1200°C and a softening point at about 1380°C. This indicates that the glass phase crystallized at about 1400°C.

It is recognized that crystallization of the second phase in the presence of $Al_2O_3$ leads to substantial improvement in high temperature strength of $Si_3N_4$ bodies.

An unexpected benefit of the present process is that oxidation resistance is substantially retained in the above bodies containing $Al_2O_3$.

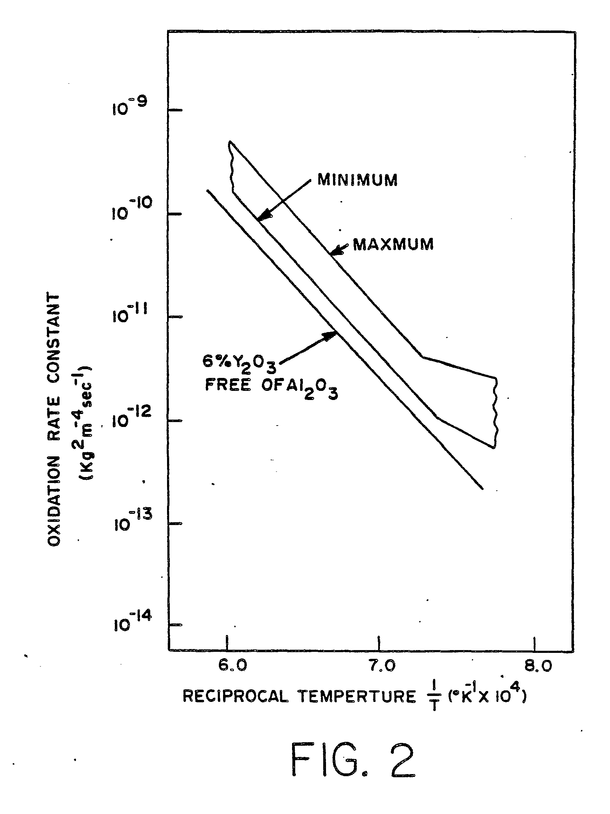

Figure 2 is a diagram of Oxidation Rate Constant $K_p(K_g^2/m^4\text{-sec})$ for $Si_3N_4$ bodies containing 4, 6, 8, 10 and 12 weight percent $Y_2O_3$ versus Reciprocal Temperature in $1/T \times 10^4$ (°K$^{-1}$). The Oxidation Rate Constants for $Si_3N_4$ bodies containing 2 weight percent $Al_2O_3$ and 4 to 12 weight percent $Y_2O_3$ are represented by the band or window defined by the lines labeled "minimum" (4 percent $Y_2O_3$) and "maximum" (10 to 12 percent $Y_2O_3$). It may be seen that the bodies containing 2 weight percent $Al_2O_3$ have only slightly increased rates of oxidation over the 6 percent $Y_2O_3$ body containing essentially no $Al_2O_3$.

Industrial applicability

The $Si_3N_4$ bodies of the present invention are useful as engine parts and components or regenerator or recuperator structures for waste heat recovery.

## Claims

1. A method for producing a polycrystalline body consisting essentially of a first phase of $Si_3N_4$ grains, and a second substantially completely crystalline intergranular phase consisting essentially of $SiO_2$, $Y_2O_3$ and $Al_2O_3$, the method comprising:

consolidating particulate starting materials of $Si_3N_4$ powder and $Y_2O_3$ powder, and $Al_2O_3$ powder in the amount of 0.25 to 2.5 weight percent of the materials, the $Si_3N_4$ powder containing up to 0.1 weight percent of cation impurities and from 2 to 4 weight percent of $SiO_2$ as an impurity on the surface of the particles;
sintering the consolidated materials;
and heat treating the sintered body within the range of 1250°C and 1600°C for a time of at least one hour in a non-oxidizing atmosphere to achieve substantially complete crystallisation of the intergranular phase.

2. The method of claim 1, wherein $SiO_2$ starting material is present in the amount of at least 3 weight percent and $Y_2O_3$ starting material is added in the amount of 3 to 13 weight percent.
3. The method of claim 2, wherein the heat treatment is carried out for at least five hours.

## Revendications

1. Procédé d'obtention d'un corps polycristallin comprenant essentiellement une première phase de $Si_3N_4$ en grains, une deuxième phase intergranulaire pratiquement complètement cristalline incluant essentiellement du $SiO_2$, de 1, $Y_2O_3$ et de 1, $Al_2O_3$, le dit procédé comprenant:

— la consolidation des matériaux initiaux en forme de particules, comprenant une poudre de $Si_3N_4$ et une poudre de $Y_2O_3$, et une poudre d, $Al_2O_3$ en quantité comprise entre 0, 25 et 2,5% en poids des matériaux, la poudre de $Si_3N_4$ contenant jusqu'a 0,1% en poids d'impuretés cationiques et de 2 à 4% en poids de $SiO_2$ en tant qu'impureté sur la surface des particules;
— le frittage des matériaux consolidés; et
— le traitement thermique du corps fritté sous une température comprise entre 1250°C et 1600°C et pendant un temps supérieur à une heure dans une atmosphère non-oxydante de manière à obtenir la cristallisation pratiquement totale de la phase intergranulaire.

2. Procédé selon la revendication 1, caractérisé en ce que le matériau initial $SiO_2$ est présent pour au moins 3% en poids et que l'on ajoute entre 3 et 13% en poids de matériau initial $Y_2O_3$.

3. Procédé selon la revendication 2, caractérisé en ce que le traitement thermique est poursuivi pendant au moins cinq heures.

**Patentansprüche**

1. Verfahren zum Herstellen eines polykristallinen Körpers, der im wesentlichen aus einer ersten Phase aus Si$_3$N$_4$-Körnern und einer zweiten, im wesentlichen vollständig kristallinen Intergranularphase besteht, die im wesentlichen aus SiO$_2$, Y$_2$O$_3$ und Al$_2$O$_3$ besteht, wobei das Verfahren besteht aus:

Konsolidieren gekörnter Ausgangsmaterialien aus Si$_3$N$_4$-Pulver und Y$_2$O$_3$-Pulver, und Al$_2$O$_3$-Pulver in einer Menge von 0.25 bis 2.5 Gew.% der Materialien, wobei das Si$_3$N$_4$-Pulver bis zu 0,1 Gew.% Kation-Verunreinigungen und von 2 bis 4 Gew.% SiO$_2$ als Verunreinigung auf der Oberfläche der Partikel enthält;
Sintern der konsolidierten Materialien;
und Wärmebehandlung des gesinterten Körpers innerhalb des Bereichs von 1250°C bis 1600°C für eine Zeit von wenigstens 1 Stunde in einer nicht-oxydierenden Atmosphäre, um im wesentlichen vollständige Kristallisierung der intergranularen Phase zu erhalten.

2. Verfahren nach Anspruch 1, bei dem SiO$_2$-Ausgangsmaterial in einer Menge von wenigstens 3 Gew.% vorhanden ist und Y$_2$O$_3$-Ausgangsmaterial in einer Menge von 3 bis 13 Gew.% hinzugefügt wird.

3. Verfahren nach Anspruch 2, bei dem die Wärmebehandlung für wenigstens 5 Stunden durchgeführt wird.

0 015 285

FIG. 1

FIG. 2